# EUROPEAN PATENT APPLICATION

(11) **EP 2 301 991 A1**
(43) Date of publication of application: **30.03.2011**
(21) Application number: 09794550.5
(22) Date of filing: 09.07.2009
(51) Int. Cl.: C08G 77/60, C08G 77/08

(54) **POLYSILANE MANUFACTURING METHOD**

(30) Priority: 11.07.2008 JP 2008181583
(71) Applicant: Japan Science And Technology Agency, Kawaguchi-shi Saitama 332-0012 (JP); National University Corporation Kanazawa University, Kanazawa-shi, Ishikawa 920-1164 (JP); JSR Corporation, Minato-ku Tokyo 105-0021 (JP)
(72) Inventor: SHIMODA, Tatsuya, Nomi-shi Ishikawa 923-1211 (JP); KAWAJIRI, Ryo, Nomi-shi Ishikawa 923-1205 (JP); ISOBE, Kiyoshi, Kanazawa-shi Ishikawa 920-1164 (JP); NAKAI, Hidetaka, Kanazawa-shi Ishikawa 920-1164 (JP); MATSUKI, Yasuo, Tokyo 105-0021 (JP)
(74) Representative: TBK-Patent
(86) International application number: PCT/JP2009/062842
(87) International publication number: WO 2010/005107

(57) **Abstract**

A polysilane production process comprising reacting a specific silane compound typified by a cyclic silane compound represented by the following formula (2) in the presence of a binuclear metal complex represented by the following formula (4).

SiⱼH₂ⱼ (2)

(in the formula (2), j is an integer of 3 to 10.)

[CpM(µ-CH₂)]₂ (4)

(in the formula (4), Cp is a cyclopentadienyl-based ligand, M is a metal atom selected from Rh and Ir, and the bond between M's is a double bond.)

## Description

### TECHNICAL FIELD

The present invention relates to a polysilane production process.

### BACKGROUND ART

The formation of a silicon thin film (such as an amorphous silicon film or a polysilicon film) pattern for use in integrated circuits and thin film transistors is generally carried out by removing unrequired portions by photolithography after a silicon film is formed on the entire surface by a vacuum process such as CVD (Chemical Vapor Deposition). However, this process involves the following problems: large-scale equipment is required, the use efficiency of raw materials is low, it is difficult to handle the raw materials because they are gaseous, and a large amount of waste is produced. Therefore, a process (coating process) for forming a silicon film by applying a polysilane having a high molecular weight to a substrate and heating or exposing it to UV has recently been proposed.

However, in the method of directly synthesizing a silane compound having a high molecular weight, the synthesizing procedure and the purification method are generally extremely difficult. JP-A 11-260729 discloses a method of directly synthesizing a high-order silane by thermopolymerization. However, in this technology, Si₉H₂₀ is merely obtained at a low yield and the size of this molecule is still unsatisfactory for the development of performance such as wettability required for the application of this molecule in the coating process.

Meanwhile, a method of obtaining a high-order silane compound by applying ultraviolet radiation to a solution of a silane compound having photopolymerizability so as to photopolymerize it has been disclosed (JP-A 2003-313299). However, this technology has a problem that large-scale equipment is required for a photopolymerization reaction.

### DISCLOSURE OF THE INVENTION

It is therefore an object of the present invention to provide a polysilane production process which eliminates the need for large-scale equipment and can be carried out under mild conditions.

The inventors of the present invention have conducted intensive studies to attain the above object and have found that a specific metal complex catalyst has such high activity in the polymerization reaction of a silane compound that a polysilane is obtained even under mild reaction conditions such as room temperature and 1 atm. The present invention has been accomplished based on this finding.

That is, according to the present invention, the above object and advantage of the present invention are attained by a polysilane production process comprising reacting at least one silane compound selected from the group consisting of a linear silane compound represented by the following formula (1), a cyclic silane compound represented by the following formula (2) and a cage-shaped silane compound represented by the following formula (3) in the presence of a binuclear metal complex represented by the following formula (4).

SiᵢH₂ᵢ₊₂ (1)

(in the formula (1), i is an integer of 1 to 8.)

SiⱼH₂ⱼ (2)

(in the formula (2), j is an integer of 3 to 10.)

SiₖHₖ (3)

(in the formula (3), k is 6, 8 or 10.)

[CpM(µ-CH₂)]₂ (4)

(in the formula (4), Cp is a cyclopentadienyl-based ligand, M is a metal atom selected from Rh and Ir, and the bond between M's is a double bond.)

### Brief Description of the Drawings

Fig. 1 is an IR spectral chart of a polysilane obtained in Example 1;
Fig. 2 is a GPC spectral chart of the polysilane obtained in Example 1; and
Fig. 3 is a ¹H-NMR spectral chart of the polysilane obtained in Example 1.

### Mode for Carrying Out the Invention

The polysilane production process of the present invention will be described in detail hereinunder.

The silane compound used in the process of the present invention is at least one selected from the group consisting of a linear silane compound represented by the above formula (1), a cyclic silane compound represented by the above formula (2) and a cage-shaped silane compound represented by the above formula (3).

The silane compound used in the process of the present invention is preferably at least one selected from the group consisting of a linear silane compound represented by the above formula (1) and a cyclic silane compound represented by the above formula (2). The linear silane compound represented by the above formula (1) is particularly preferably at least one selected from the group consisting of SiH₄ (monosilane), Si₂H₆ (disilane) and Si₃H₈ (trisilane). The cyclic silane compound represented by the above formula (2) is particularly preferably at least one selected from the group consisting of cyclopentasilane represented by the following formula (2-A), cyclohexasilane represented by the following formula (2-B) and silylcyclopentasilane represented by the following formula (2-C).

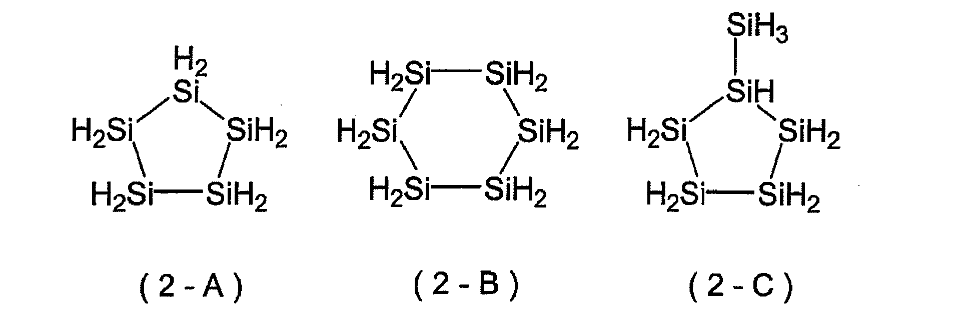

The silane compound in the present invention is preferably a cyclic silane compound represented by the above formula (2), particularly preferably at least one selected from the group consisting of the compounds represented by the above formulas (2-A), (2-B) and (2-C).

These preferred silane compounds can be produced through decaphenylcyclopentasilane and dodecaphenylcyclopentasilane produced from diphenyldichlorosilane. These silane compounds may be used alone or in combination of two or more.

The binuclear metal complex used in the process of the present invention is a complex represented by the above formula (4). This complex has high activity and is particularly effective in the polysilane production process of the present invention. The reason for this is assumed to be that the electron density between metal atoms is high due to the double bond between M's with the result of strong reducing power.

The cyclopentadienyl-based ligand in the above nuclear metal complex is, for example, a cyclopentadienyl ligand or substituted cyclopentadienyl ligand represented by the following formula (5). 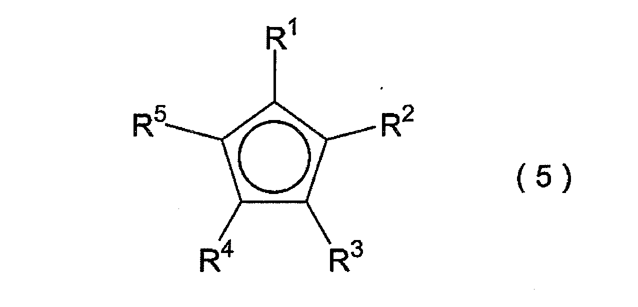 (in the formula (5), R¹, R², R³, R⁴ and R⁵ are each independently a hydrogen atom, alkyl group having 1 to 5 carbon atoms, aryl group having 6 to 14 carbon atoms, trifluoromethyl group or trialkylsilyl group having an alkyl group with 1 to 4 carbon atoms.)

Examples of the aryl group having 6 to 14 carbon atoms include phenyl group, naphthalenyl group and anthracenyl group.

The cyclopentadienyl-based ligand is preferably an alkyl-substituted cyclopentadienyl ligand of the above formula (5) in which 1 to 5 out of R¹, R², R³, R⁴ and R⁵ are alkyl groups having 1 to 5 carbon atoms and the rest are hydrogen atoms; an aryl-substituted cyclopentadienyl ligand of the above formula (5) in which 1 to 5 out of R¹, R², R³, R⁴ and R⁵ are aryl groups having 6 to 14 carbon atoms and the rest are hydrogen atoms; or a trialkylsilyl-substituted cyclopentadienyl ligand of the above formula (5) in which 1 to 5 out of R¹, R², R³, R⁴ and R⁵ are trialkylsilyl groups having an alkyl group with 1 to 4 carbon atoms and the rest are hydrogen atoms.

The binuclear metal complex used in the process of the present invention is preferably a complex represented by any one of the following formulas (6) to (9). 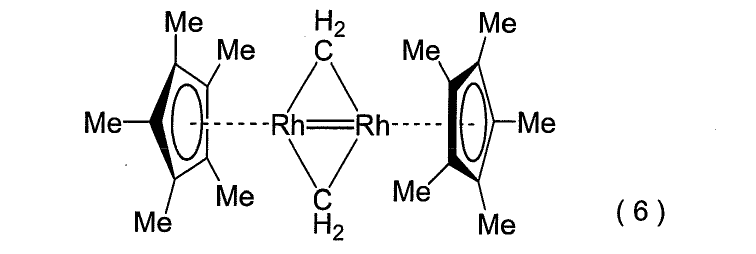 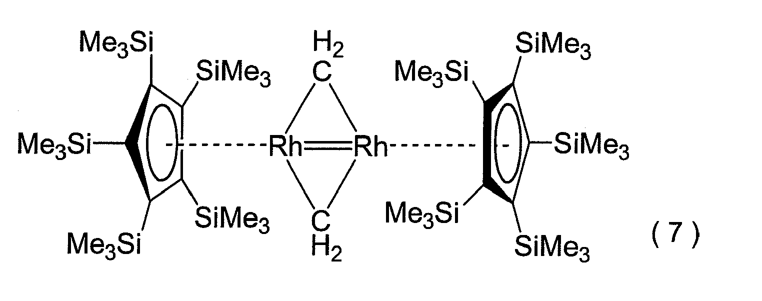 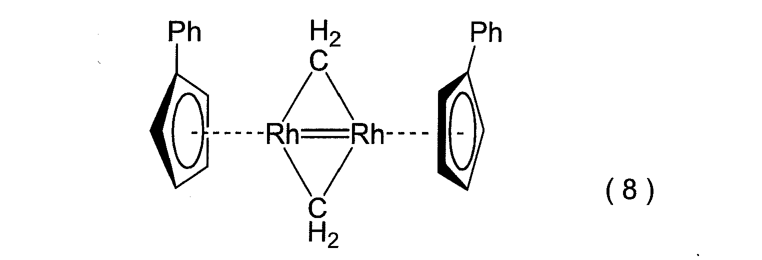 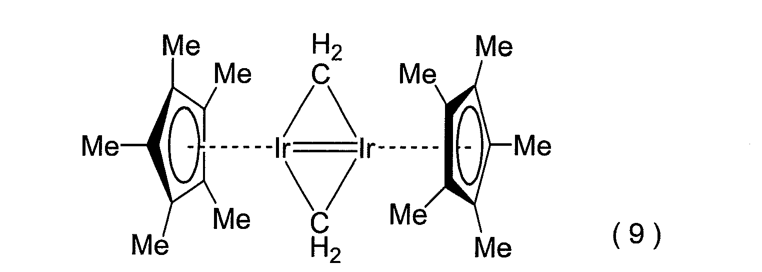 (Me in the formulas (6), (7) and (9) is a methyl group and Ph in the formula (8) is a phenyl group.)

The cyclopentadienyl-based ligand is particularly preferably a pentamethylcyclopentadienyl ligand (η⁵-C₅(CH₃)₅, to be also referred to as "Cp*" hereinafter) which is easily acquired and has high electron releasability from the viewpoints of further increasing the electron density chemically and maintaining the three-dimensional shape stability of a reaction field. Therefore, the binuclear metal complex used in the process of the present invention is particularly preferably a complex represented by the above formula (6) or (9).

To synthesize the above binuclear metal complex [CpM(µ-CH₂)]₂, for example, [CpM(µ-CH₂)CH₃]₂ is reacted with hydrogen chloride to obtain [CpM(µ-CH₂)Cl]₂ which is then reacted with Na.

The synthesis of the starting material [CpM(µ-CH₂)CH₃]₂ may be carried out in accordance with the method described in J. Chem. Soc., Dalton Trans., 1441-1447 (1983). The reaction between [CpM(µ-CH₂)Cl]₂ and hydrogen chloride may be carried out in accordance with the method described in J. Chem. Soc., Dalton Trans., 1215-1221 (1984). Stated more specifically, the temperature of a solution containing [CpM(µ-CH₂)CH₃]₂ is adjusted to 0 to 30°C, and hydrogen chloride is blown into the solution to carry out the reaction. As a solvent for this reaction may be used pentane, toluene, dichloromethane or chloroform. Then, Na is added to the obtained solution containing [CpM(µ-CH₂)Cl]₂ to carry out a reaction, a precipitate is removed, and a powder obtained by removing the solvent is purified by a suitable technique such as recrystallization to obtain the binuclear metal complex [CpM(µ-CH₂)]₂ of interest. As the solvent contained in the solution containing [CpM(µ-CH₂)Cl]₂ may be used benzene, toluene, hexane, pentene, cyclohexane or tetrahydrofuran.

In the process of the present invention, the above silane compound is reacted in the presence of the above binuclear metal complex. This reaction is preferably carried out in a liquid state. When the starting material silane compound is liquid, it may be mixed with the binuclear metal complex in the absence of a solvent but the above reaction is preferably carried out in the presence of a suitable solvent. The solvent which can be used herein is not particularly limited as long as it dissolves the silane compound and does not react with the compound and the above binuclear metal complex. Examples of the solvent include hydrocarbon solvents such as n-pentane, n-hexane, n-heptane, n-octane, n-decane, dicyclopentane, benzene, toluene, xylene, durene, indene, tetrahydronaphthalene, decahydronaphthalene and squalane; ether solvents such as dipropyl ether, ethylene glycol dimethyl ether, ethylene glycol diethyl ether, ethylene glycol methyl ethyl ether, diethylene glycol dimethyl ether, diethylene glycol diethyl ether, diethylene glycol methyl ethyl ether, tetrahydrofuran, tetrahydropyran and p-dioxane; and polar solvents such as propylene carbonate, γ-butyrolactone, N-methyl-2-pyrrolidone, dimethyl formamide, acetonitrile and dimethyl sulfoxide. Out of these, hydrocarbon solvents and ether solvents are preferred, and hydrocarbon solvents are particularly preferred from the viewpoints of the solubility of the silane compound and the stability of the solution. These solvents may be used alone or in combination of two or more.

The amount of the solvent is such that the concentration of the silane compound in the obtained solution becomes preferably not less than 0.1 mass%, more preferably 0.5 to 10 mass%.

The amount of the binuclear metal complex is preferably 5 x 10⁻⁴ to 5 x 10⁻¹ mol, more preferably 1 x 10⁻³ to 1 x 10⁻¹ mol based on 1 mol of the silane compound as the starting material. When the amount of the binuclear metal complex is smaller than 5 x 10⁻⁴ mol, the reaction may not proceed sufficiently and when the amount is larger than 5 x 10⁻¹ mol, the molecular weight of the obtained polysilane may become too low.

The temperature for the reaction of the silane compound in the presence of the binuclear metal complex is preferably -30 to 100°C, more preferably 0 to 50°C. The pressure for the reaction is preferably 1 x 10⁴ to 1 x 10⁶ N/m², more preferably 5 x 10⁴ to 2 x 10⁵ N/m², particularly preferably 1 atm. (1.01 x 10⁴ N/m²). The reaction time is preferably 10 minutes to 50 hours, more preferably 1 to 30 hours.

The weight average molecular weight of the polysilane obtained as described above can be adjusted to any value according to its use purpose and use manner by suitably setting the amount of the binuclear metal complex, the reaction temperature, the reaction pressure and the reaction time. The weight average molecular weight of the polysilane obtained by the process of the present invention can be set to, for example, 500 to 500,000, specifically 2,000 to 100,000. The weight average molecular weight is a value in terms of polystyrene measured by gel permeation chromatography (GPC).

It is preferred that the binuclear metal complex should be removed from the polysilane solution obtained by the process of the present invention. The removal of the binuclear metal complex from the polysilane solution can be carried out by the following methods: (1) the polysilane solution is let flow into a suitable column containing silica gel or alumina to adsorb the binuclear metal complex, (2) the polysilane solution is washed in deaerated water, and (3) a poor solvent for the binuclear metal complex is added to the polysilane solution to precipitate the binuclear metal complex and the obtained precipitate is removed by filtration.

The polysilane solution obtained by the process of the present invention can be advantageously used as a composition for forming a silicon film which is used in integrated circuits, thin film transistors, photoelectric converters and photoreceptors.

The polysilane solution obtained by the process of the present invention can be used as a composition containing other additives as required. For example, a desired n-type or p-type silicon film containing a dopant can be formed by adding a substance containing the group 3B element or the group 5B element of the periodic table as a dopant source to the polysilane solution. The wettability of an object to be coated by the solution can be further improved, the leveling properties of the coating film can be improved and the production of irregularities on the coating film and an orange-peel skin can be prevented by adding a small amount of a fluorine-based, silicone-based or nonionic surfactant to the polysilane solution as required.

### Examples

The following examples are provided for the purpose of further illustrating the present invention but are in no way to be taken as limiting.

### Synthesis Example 1 (synthesis of binuclear rhodium complex)

[Cp*Rh(µ-CH₂)Cl]₂ was first synthesized in accordance with the method described in J. Chem. Soc., Dalton Trans., 1215-1221 (1984). Stated more specifically, when the temperature of a pentane solution of [Cp*Rh(µ-CH₂)Me]₂ was adjusted to 20°C and a hydrogen chloride gas was blown into this solution to carry out a reaction at the same temperature for 3 minutes, the color of the solution became dark purple, and a reddish brown precipitate was obtained. The obtained precipitate was collected and purified by recrystallization to obtain [Cp*Rh(µ-CH₂)Cl]₂.

Then, 203 mg (0.353 mmol) of the obtained [Cp*Rh(µ-CH₂)Cl]₂ was dissolved in 20 mL of anhydrous benzene, and 64 mg of Na was added to this. When this solution was stirred for 5 hours, a white precipitate separated out, and the color of the solution changed from red to turquoise. After the precipitate was removed by filtration, the solvent was removed from the obtained solution to obtain a dark-blue powder (yield of 168 mg, yield rate of 95 % (based on Rh)). The reaction formula of this reaction is as follows.

[Cp*Rh(µ-CH₂)Cl]₂ + 2Na → [Cp*Rh(µ-CH₂)]₂ + 2NaCl

The obtained dark-blue powder was recrystallized with toluene to obtain a blue crystal. When ¹H-NMR, ¹³C-NMR and UV spectra (UV/vis) of this crystal were measured, it was found that this crystal was a complex represented by the above formula (6). The results of ¹H-NMR and UV spectra are given below.
¹H-NMR (400 MHz, C₆D₆) : δ1.64 (s, C₅Me₅, 30H), 9.44 (t, µ-CH₂, 4H)
¹³C-NMR (100 MHz, C₆D₆) : δ157.2, 93.5, 10.8
UV/vis (C₆H₆) : λmax = 606 nm (ε = 1.02 x 10⁴ M⁻¹ cm⁻¹)

### Synthesis Example 2 (synthesis of binuclear iridium complex)

The starting material [Cp*Ir(µ-CH₂)Cl]₂ was first synthesized in the same manner as in the above Synthesis Example 1.

Then, [Cp*Ir(µ-CH₂)Cl]₂ (203 mg, 0.269 mmol) was dissolved in anhydrous benzene (20 mL) in a nitrogen atmosphere, and Na (64 mg) was added to the resulting solution. When this solution was stirred for 5 hours, a white precipitate separated out and the color of the solution changed from reddish orange to purple. After the precipitate was removed by filtration, the solvent was removed from the obtained solution to obtain a red powder (yield of 181 mg, yield rate of 98 % (based on Ir)). The reaction formula is as follows.

[Cp*Ir(µ-CH₂)Cl]₂ + 2Na → [Cp*Ir(µ-CH₂)]₂ +2NaCl

The obtained red powder was recrystallized with tetrahydrofuran to obtain a red crystal. It was found from the NMR and UV spectra that the obtained red crystal was a binuclear metal complex represented by the above formula (9). ¹H-NMR (400 MHz, C₆D₆) : δ1.72 (s, C₅Me₅, 30H), 9.01 (s, µ-CH₂, 4H)
¹³C-NMR (100 MHz, C₆D₆) : δ88.7, 88.1, 10.6
UV/vis(C₆H₆) : λmax = 474 nm (ε = 1.43 x 10⁴ M⁻¹ cm⁻¹)

### Synthesis Example 3 (synthesis of binuclear rhodium complex)

The starting material [Cp(SiMe₃)₅Rh(µ-CH₂)Cl]₂ was first synthesized in the same manner as in the above Synthesis Example 1.

Then, [Cp(SiMe₃)₅Rh(µ-CH₂)Cl]₂ (266 mg, 0.350 mmol) was dissolved in anhydrous benzene (20 mL) in a nitrogen atmosphere, and Na (64 mg) was added to the resulting solution. When this solution was stirred for 5 hours, a white precipitate separated out. After the precipitate was removed by filtration, the solvent was removed from the obtained solution to obtain a powder (yield of 222 mg, yield rate of 92 % (based on Rh)). The reaction formula is as follows.

[Cp(SiMe₃)₅Rh(µ-CH₂)Cl]₂ + 2Na → [Cp(SiMe₃) 5Rh (µ-CH₂)]₂ +2NaCl

It was found from the NMR and UV spectra that the obtained powder was a binuclear metal complex represented by the above formula (7).

### Synthesis Example 4 (synthesis of binuclear rhodium complex)

The starting material [Cp(Ph)Rh(µ-CH₂)Cl]₂ was first synthesized in the same manner as in the above Synthesis Example 1.

Then, [Cp(Ph)Rh(µ-CH₂)Cl]₂ (206 mg, 0.351 mmol) was dissolved in anhydrous benzene (20 mL) in a nitrogen atmosphere, and Na (64 mg) was added to the resulting solution. When this solution was stirred for 5 hours, a white precipitate separated out. After the precipitate was removed by filtration, the solvent was removed from the obtained solution to obtain a powder (yield of 170 mg, yield rate of 94 % (based on Rh)). The reaction formula is as follows.

[Cp(Ph)Rh(µ-CH₂)Cl]₂ + 2Na → [Cp(Ph)Rh(µ-CH₂)]₂ + 2NaCl

It was found from the NMR and UV spectra that the obtained powder was a binuclear metal complex represented by the above formula (8).

### Example 1 (Synthesis Example 1 of polysilane)

0.3875 g (2.5 mmol) of cyclopentasilane was dissolved in 10 g of deaerated toluene to obtain a cyclopentasilane solution. When 12.55 mg (0.025 mmol) of the binuclear rhodium complex represented by the above formula (6) obtained in the above Synthesis Example 1 was added to the obtained cyclopentasilane solution and stirred at 25°C and 1 atm. for 24 hours, a reddish brown viscous solution was obtained. Then, the obtained viscous solution was applied to a silica gel column (Kieselgel 60 of Merck & Co., Inc.) to be purified so as to remove the binuclear rhodium complex. When infrared spectroscopy analysis, GPC analysis and ¹H-NMR analysis were made on the colorless transparent viscous solution obtained after column purification, it was found that this solution was a solution containing a polysilane.

### <infrared spectroscopy analysis>

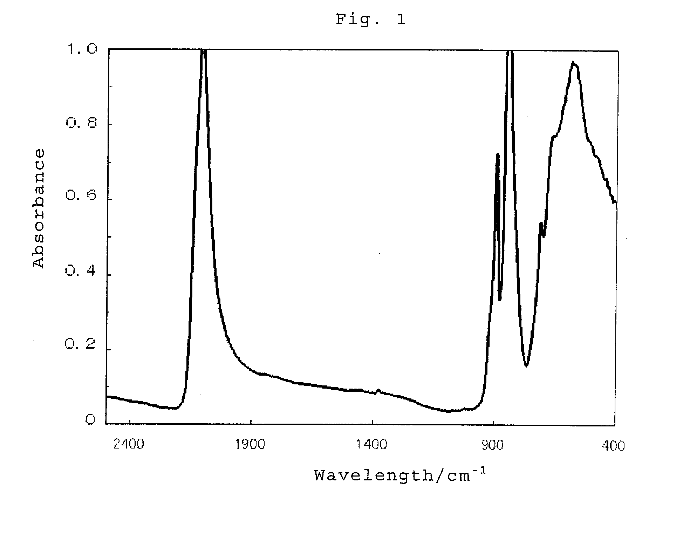

After the obtained viscous solution was applied to a KBr plate in a nitrogen atmosphere and the solvent was removed from the solution, the IR absorption spectrum of the obtained product was measured in a glove box in a nitrogen atmosphere at 25°C. The measured IR spectral chart is shown in Fig. 1.
IR (neat): 2, 108 cm⁻¹ (ν_{Si-H}), 893 cm⁻¹, 847 cm⁻¹ (ν_{Si-H})

### <GPC analysis>

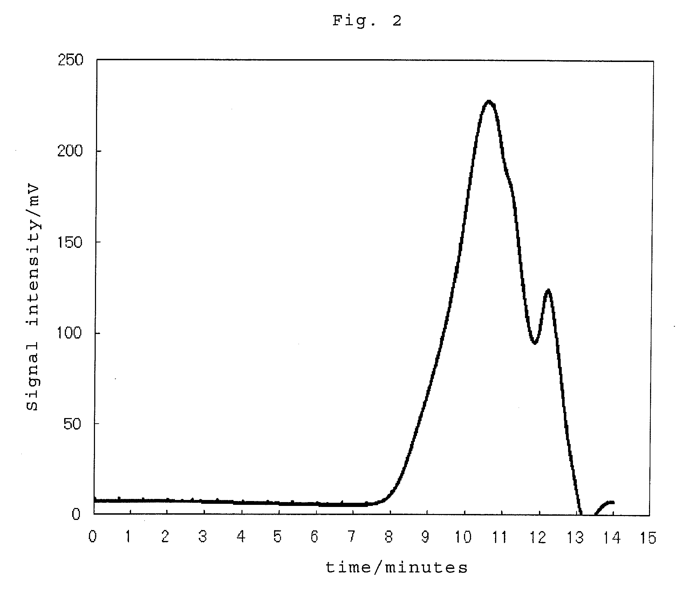

The solvent was removed from the obtained viscous solution and the resulting solution was dissolved in cyclohexane to prepare a 1 mass% cyclohexane solution. When GPC analysis was made on the prepared cyclohexane solution under the following conditions, it was found that the obtained polysilane had a weight average molecular weight (Mw) of 9,500 and a molecular weight distribution index (Mw/Mn) of 1.45. The measured GPC spectral chart is shown in Fig. 2.

### [measurement instrument]

The GPCMAX and TDA-302 of VISCOTEK were brought into the glove box as a gel permeation chromatograph analyzer to carry out GPC analysis in a nitrogen gas stream at an oxygen concentration of 10 ppm or less.

### [column for gel permeation chromatography]

The TSK-GELG3000HHR, TSK-GELG2000HHR and TSK-GELG1000HHR (these columns containing a styrene-divinylbenzene copolymer having a particle diameter of 5 µm) of Tosoh Corporation were connected in series as columns for GPC analysis.

### [solvent]

Cyclohexane (manufactured by Wako Pure Chemical Industries, Ltd.) was used as a solvent for GPC analysis.

### [standard sample]

Polystyrene (TSK standard POLYSTYRENE of Tosoh Corporation) was used.

### <¹H-NMR analysis>

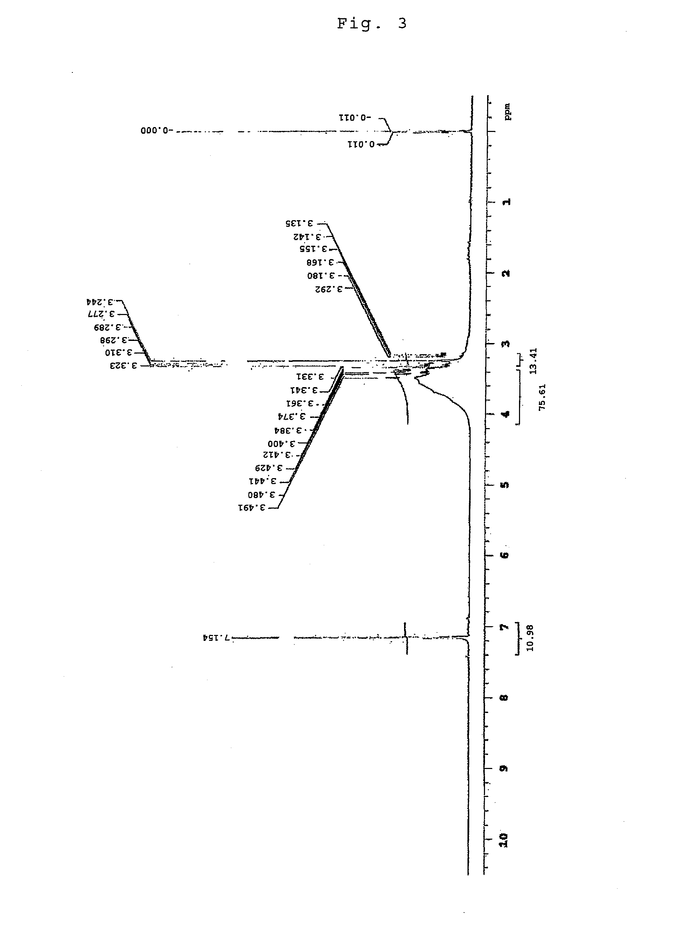

The solvent was removed from the obtained viscous solution and the resulting solution was dissolved in benzene-d₆ to carry out 300 MHz ¹H-NMR analysis on the solution with tetramethylsilane as an internal standard. The measured ¹H-NMR spectral chart is shown in Fig. 3.
¹H-NMR (300 MHz, C₆D₆) : δ3.24 (3.0 - 4.0 ppm)

### Example 2 (Synthesis Example 2 of polysilane)

A reaction was carried out under the same conditions as in the above Example 1 except that 16.4 mg (0.025 mmol) of the binuclear iridium complex represented by the above formula (9) obtained in the above Synthesis Example 2 was used in place of the binuclear rhodium complex in Example 1 to obtain a colorless transparent viscous solution.

When ¹H-NMR analysis, infrared spectroscopy analysis and GPC analysis were made on this viscous solution in the same manner as in Example 1, it was found that this was a solution containing a polysilane having a weight average molecular weight of 5,500.

### Example 3 (Synthesis Example 3 of polysilane)

When 0.45 g (2.5 mmol) of silylcyclopentasilane was dissolved in 10 g of deaerated toluene and 13 mg (0.025 mmol) of the binuclear rhodium complex represented by the above formula (6) obtained in Synthesis Example 1 was added to the resulting solution and stirred at 25°C and 1 atm. for 2 hours, a reddish brown viscous solution was obtained, accompanied by the production of a violent hydrogen gas. This viscous solution was applied to a silica gel column (Kieselgel 60 of Merck & Co., Inc.) to be purified so as to remove the binuclear rhodium complex, thereby obtaining a colorless transparent viscous solution.

When ¹H-NMR analysis and infrared spectroscopy analysis were made on this viscous solution in the same manner as in Example 1, it was found that this viscous solution was a solution containing a polysilane. It was also found by GPC measurement that this polysilane had a weight average molecular weight (Mw) of 12,000 and a number average molecular weight (Mn) of 4,000.

The silylcyclopentasilane used in this Example was synthesized in accordance with the method described in JP-A 2001-253706 (same as in Example 4).

### Example 4 (Synthesis Example 4 of polysilane)

0.45 g (2.5 mmol) of silylcyclopentasilane was dissolved in 10 g of deaerated tetralin, and 27 mg (0.025 mmol) of the binuclear rhodium complex represented by the above formula (7) obtained in the above Synthesis Example 3 was added to the resulting solution and stirred at 40°C and 1 atm. for 24 hours. Right after the addition of the complex, a hydrogen gas was produced and a reddish brown viscous solution was obtained in the end. This viscous solution was applied to a silica gel column (Kieselgel 60 of Merck & Co., Inc.) to be purified so as to remove the binuclear rhodium complex, thereby obtaining a colorless transparent viscous solution.

When ¹H-NMR analysis and infrared spectroscopy analysis were made on this viscous solution in the same manner as in Example 1, it was found that this viscous solution was a solution containing a polysilane. It was also found by GPC measurement that this polysilane had a weight average molecular weight (Mw) of 1,800 and a number average molecular weight (Mn) of 870.

### Example 5 (Synthesis Example 5 of polysilane)

0.45 g (2.5 mmol) of cyclohexasilane was dissolved in 10 mL of deaerated cyclohexane in a glove box in a nitrogen atmosphere. 13 mg (0.025 mmol) of the binuclear rhodium complex represented by the above formula (8) obtained in the above Synthesis Example 4 was added to this solution and stirred at 25°C and 1 atm. for 2 hours to obtain a viscous solution. This viscous solution was applied to a silica gel column (Kieselgel 60 of Merck & Co., Inc.) to be purified so as to remove the binuclear rhodium complex, thereby obtaining a colorless transparent viscous solution.
When ¹H-NMR analysis and infrared spectroscopy analysis were made on this viscous solution in the same manner as in Example 1, it was found that this viscous solution was a solution containing a polysilane. It was also found by GPC measurement that this polysilane had a weight average molecular weight (Mw) of 10,700 and a number average molecular weight (Mn) of 4,200.
The cyclohexasilane used in this Example was synthesized by chlorinating dodecaphenylcyclohexasilane obtained by the Kipping reaction of diphenyldichlorosilane with hydrogen chloride in the presence of an aluminum chloride catalyst and reducing the chlorinated product with hydrogenated lithium aluminum.

### Effect of the Invention

According to the present invention, there is provided a polysilane production process which eliminates the need for large-scale equipment and can be carried out under mild conditions such as room temperature and 1 atm.

## Claims

1. A polysilane production process comprising reacting at least one silane compound selected from the group consisting of a linear silane compound represented by the following formula (1), a cyclic silane compound represented by the following formula (2) and a cage-shaped silane compound represented by the following formula (3) in the presence of a binuclear metal complex represented by the following formula (4).
SiᵢH₂ᵢ₊₂ (1)
(in the formula (1), i is an integer of 1 to 8.)
SiⱼH₂ⱼ (2)
(in the formula (2), j is an integer of 3 to 10.)
SiₖHₖ (3)
(in the formula (3), k is 6, 8 or 10.)
[CpM(µ-CH₂)]₂ (4)
(in the formula (4), Cp is a cyclopentadienyl-based ligand, M is a metal atom selected from Rh and Ir, and the bond between M's is a double bond.)

2. The polysilane production process according to claim 1, wherein the silane compound is a cyclic silane compound represented by the above formula (2).

3. The polysilane production process according to claim 2, wherein the silane compound is at least one selected from the group consisting of compounds represented by the following formulas (2-A) to (2-C).

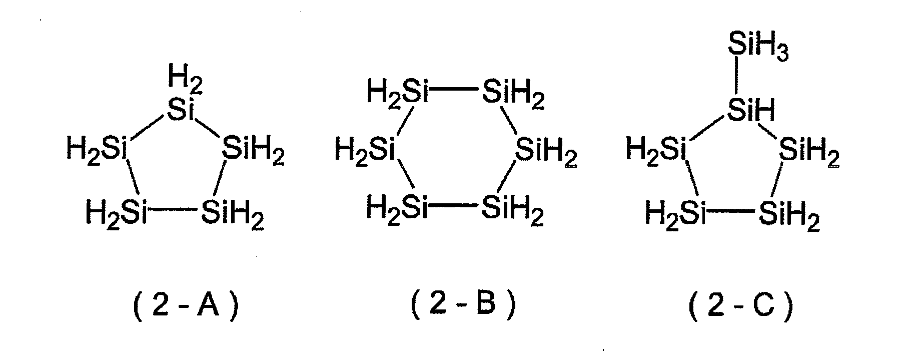

4. The polysilane production process according to claim 1, wherein the cyclopentadienyl-based ligand in the above formula (4) is a cyclopentadienyl ligand or substituted cyclopentadienyl ligand represented by the following formula (5). 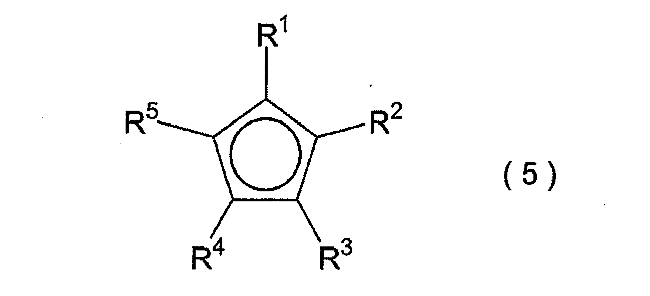 (in the formula (5), R¹, R², R³, R⁴ and R⁵ are each independently a hydrogen atom, alkyl group having 1 to 5 carbon atoms, aryl group having 6 to 14 carbon atoms, trifluoromethyl group or trialkylsilyl group having an alkyl group with 1 to 4 carbon atoms.)

5. The polysilane production process according to claim 4, wherein the binuclear metal complex represented by the above formula (4) is a complex represented by any one of the following formulas (6) to (9). 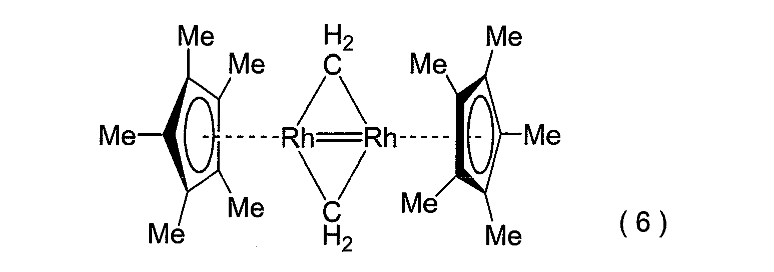 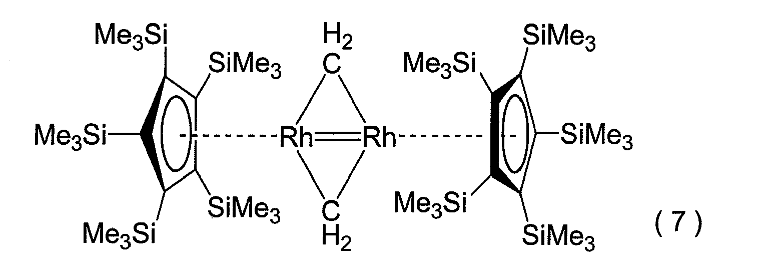 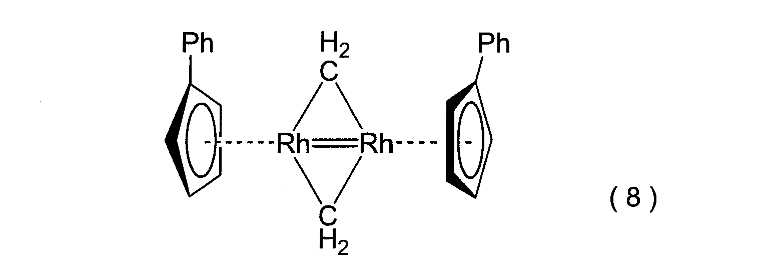 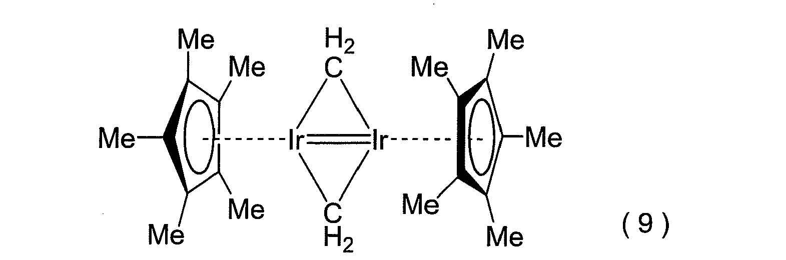 (Me in the formulas (6), (7) and (9) is a methyl group and Ph in the formula (8) is a phenyl group.)

6. The polysilane production process according to any one of claims 1 to 5, wherein the binuclear metal complex represented by the above formula (4) is used in an amount of 5 x 10⁻⁴ to 5 x 10⁻¹ mol based on 1 mol of the silane compound.

7. The polysilane production process according to any one of claims 1 to 5, wherein the temperature for reacting the silane compound in the presence of the binuclear metal complex represented by the above formula (4) is -30 to 100°C.
